# EUROPÄISCHE PATENTSCHRIFT

(11) **EP 3 369 158 B1**
(45) Veröffentlichungstag und Bekanntmachung des Hinweises auf die Patenterteilung: **13.04.2022**
(21) Anmeldenummer: 16778297.8
(22) Anmeldetag: 30.09.2016
(51) Int. Cl.: H02K 5/14, H01R 39/38

(54) **BÜRSTENSYSTEM EINES ELEKTROMOTORS**
BRUSH SYSTEM OF AN ELECTRIC MOTOR
SYSTÈME DE BALAIS D'UN MOTOEUR ELECTRIQUE

(30) Priorität: 26.10.2015 DE 102015220897
(43) Veröffentlichungstag der Anmeldung: 05.09.2018
(73) Patentinhaber: Brose Fahrzeugteile SE & Co. Kommanditgesellschaft, Bamberg, 96052 Bamberg (DE)
(72) Erfinder: BOCK, Michael, 97297 Waldbüttelbrunn (DE)
(74) Vertreter: FDST Patentanwälte
(86) Internationale Anmeldenummer: PCT/EP2016/073492
(87) Internationale Veröffentlichungsnummer: WO 2017/071910

(56) Entgegenhaltungen:
- EP-A2- 1 324 439
- WO-A1-97/01878
- JP-A- 2008 172 942
- US-A- 4 868 441

## Beschreibung

Die Erfindung betrifft ein Bürstensystem eines Elektromotors mit einem Kommutator, mit mindestens einer in einem Bürstenschacht geführten und eine Anschlussleitung aufweisenden Bürste, und mit einem Federelement, das in dessen Wirkverbindung mit der Bürste eine Federkraft auf diese zu deren Anlage am Kommutator ausübt. Die Erfindung betrifft weiterhin einen Elektromotor mit einem derartigen Bürstensystem.

Kraftfahrzeuge weisen heutzutage üblicherweise eine Anzahl an Verstellteilen, beispielsweise eine Sitzverstellung, ein betätigbares Schloss, Fensterheber und/ oder ein verstellbares Schiebedach auf, welche mittels eines jeweils zugeordneten elektromotorischen Verstellantriebs zwischen verschiedenen Stellpositionen verfahrbar sind. Das jeweilige Verstellteil wird mittels eines von einem Gleichstrommotor beziehungsweise Elektromotor angetriebenen Getriebes beispielsweise in Form eines Schneckengetriebes mit einer (antriebsseitigen) Schnecke auf der Motorwelle und mit einem (abtriebsseitigen) Schneckenrad betätigt. Herkömmlicherweise ist das Getriebe in einem Getriebegehäuse angeordnet, an welches der Elektromotor über dessen Motorgehäuse angeflanscht ist. Üblicherweise wird der Elektromotor an dessen Stirnseite am Getriebegehäuse befestigt, wobei ein Achszapfen, das heisst das den antriebsseitigen Getriebeteil (wellenendseitige Schnecke) tragende Wellenende der Motorwelle des Elektromotors, in das Getriebegehäuse hineinragt.

An der Stirnseite des Elektromotors befinden sich zudem Steckkontakte, die mit korrespondierenden, im Getriebegehäuse angeordneten Gegenkontakten elektrisch verbunden werden. Die Steckkontakte sind in einem herkömmlicherweise aus Kunststoff hergestellten Bürstensystem des vorzugsweise als Kommutatormotor mit rotorseitigem Kommutator ausgeführten Elektromotors formschlüssig angeordnet und mittels Strukturen gegen ein Verrutschen oder Verschieben gesichert. Die Strukturen der Steckkontakte können sägezahnartig oder tannenbaumartig ausgeführt sein, und verhindern mittels der als Widerhaken wirkenden Zähne eine Verlagerung der Steckkontakte sowohl bei der Montage als auch während des Betriebs des Antriebs. Bei der Herstellung des Elektromotors werden die Steckkontakte mit dem Kunststoff des Grundkörpers umspritzt und somit der Formschluss zwischen diesen beiden hergestellt.

In Abweichung zu einem bürstenlosen Elektromotor bestreichen bei einem mit einem wellenfesten Kommutator versehenen Elektromotor üblicherweise zwei oder auch mehrere Bürsten eine Anzahl von Kommutatorlamellen, die den elektrischen Strom auf die Wicklungen eines sich mit der Motorwelle drehenden Rotors übertragen. Mittels der Lamellen wird von Wicklung zu Wicklung eine Stromwendung (Kommutierung) erzeugt, die gegenüber üblicherweise feststehenden Magnetpolen des Stators ein Drehmoment auf die Motorwelle (Rotorwelle) erzeugt. Hierbei sind die Steckkontakte mit den Bürsten mittels litzenartigen Anschlussleitungen elektrisch leitfähig kontaktiert.

Bei den Bürsten handelt es sich herkömmlicherweise um quaderartige, aus Kohlepulver - gegebenenfalls zusammen mit Metallpartikeln - gepresste Stäbe. Aufgrund des Schleifkontakts mit den Kommutatorlamellen unterliegen die Bürsten im Betrieb des Elektromotors einem Abrieb. Um trotz des Abriebs den Kontakt zwischen Bürste und Kommutator aufrecht zu erhalten, sind die Bürsten in der Regel in einem köcherartigen Bürstenschacht mittels mechanischer Federn unter Wirkung deren Federkraft verschiebbar gelagert, so dass eine automatische Nachstellung der Bürsten erfolgt. Die Federkraft kann beispielsweise mittels Schenkel-, Druck-, Blatt- oder Rollbandfedern erzeugt werden.

Der jeweilige Bürstenschacht ist häufig auf einem beispielsweise als Bürstenplatte ausgeführten Träger (Bürstenträger) angeordnet, der zusammen mit den Bürsten und den erforderlichen elektrischen Kontaktmitteln sowie gegebenenfalls vorhandenen Entstörelementen (Spulen, Drosseln, Kondensatoren) das sogenannte Bürstensystem bildet.

Bei einer Montage des Elektromotors ist es beim Aufbringen des zweckmäßigerweise ringartigen Bürstensystems auf den Kommutator notwendig, die kollidierenden Bürsten entgegen der Federkraft der Feder derart einzudrücken und im Bürstenschacht zurückzuhalten, sodass der Kommutator durch eine zentrale Öffnung des Bürstensystems hindurchgeführt werden kann, ohne an den Bürsten zu kollidieren. Im Falle einer Kollision besteht für die Bürsten die Gefahr eines Kantenbruchs, wodurch die Kommutatorlamellen im Betrieb mitunter nicht gleichmäßig bestrichen beziehungsweise kontaktiert werden.

Zur Rückhaltung der Bürsten sind beispielsweise Rückhalteringe bekannt, die den benötigten Führ- oder Fügeraum des Kommutators bei der Montage freihalten. Derartige Rückhalteringe müssen jedoch als Zusatzbauteile vor der Motormontage eingesetzt und anschließend nach der Montage wieder entnommen werden, wodurch die Montage des Elektromotors besonders zeitaufwendig und kostenintensiv wird.

Alternativ ist es zur Rückhaltung ebenso möglich, dass die Bürsten, insbesondere in Kombination mit einer Schenkelfeder, ohne Zusatzbauteile im Bürstenschacht montiert werden. Zu diesem Zwecke weisen die Bürsten typischerweise zusätzliche Nuten und/oder Haltekonturen auf, die in Zusammenwirkung mit schachtseitigen Gegenkonturen einen Einschubweg der Bürsten begrenzen. Dadurch werden die Bürsten im Bürstenschacht beispielsweise geklemmt und vor einem Verrutschen gesichert. Nachteiligerweise wird zur Herstellung derartiger Bürsten ein vergleichsweise kompliziertes und somit kostenintensives (Kohle-)Presswerkzeug benötigt.

Aus der JP 2008-172 942 A ist es bekannt, die Bürstenandruckfeder in einer stand-by-Positon zu halten, um die jeweilige Bürste zeit- oder bedarfsweise in einer den Kommutator nicht beaufschlagenden Position zu halten.

Die DE 21 57 596 A1 offenbart einen Anschlag im Führungsschlitz eines Schleifbürstenhalters für eine Kontaktlitze einer von einer Druckfeder beaufschlagten Schleifbürste. Der Anschlag ist gebildet durch eine Verengung des Führungsschlitzes an dem einem Plankollektor eines Motorankers zugewandten Schlitzende (Schlitzaustritt) des Führungsschlitzes. Dadurch soll verhindert werden, dass die Bürste in Folge der dauernd wirkenden Federkraft der Druckfeder vollständig aus dem Bürstenhalter gedrückt werden kann

Aus der US 4,868,441 ist es bekannt, den Führungsschlitz für die Bürstenlitze im Bürstenköcher L-förmig auszubilden. Dabei dient der kurze, tangential verlaufende L-Schenkel als Arretierungsposition der Bürste bei deren in den Bürstenköcher eingezogener (eingefahrener) Position, wobei die Bürstenlitze im eingezogenen Zustand der Bürste eine Übergangskante zwischen den beiden L-Schenkeln des Führungsschlitzes hintergreift und im vergleichsweise kurzen L-Schenkel des Führungsschlitzes einsitzt. Da dieser kurze L-Schenkel senkrecht zum radialen L-Schenkel des Führungsschlitzes verläuft, verbleibt die Bürste trotz wirkender Federkraft der Bürstenfeder in einer Vorposition. Zur Aktivierung der Bürstenfunktion muss die Bürstenlitze durch entsprechende Handhabung (manuell) über die Übergangskante gehoben und in den radialen L-Schenkel des Führungsschlitzes verbracht werden.

In der WO 97/01878 A1 ist ein Bürstenhalter mit einem Federstreifen beschrieben, wobei der Federstreifen ein Zwischensegment in Längsrichtung und in Längsrichtung gegenüberliegende Endsegmente aufweist. Mindestens eines dieser Endsegmente weist eine Spule auf, welche sich auf- und abwickelt, um dem Zwischensegment in Längsrichtung eine abnehmende und zunehmende Länge zu verleihen. Der Bürstenhalter weist weiterhin Positionierungsmittel zum Positionieren der Endsegmente des Federstreifens relativ zu dem Bürstenhalter auf. Das mindestens eine Endsegment umfasst eine Spule, wobei die Positionierungseinrichtung durch eine integrale Ausbildung des Bürstenköchers bereitgestellt wird, die sowohl die Spule positioniert als auch das Zwischensegment des Federstreifens führt, wenn das Zwischensegment von der Spule zu der jeweiligen Seite der Bürste verläuft.

Die EP 1324 439 A2 offenbart einen Bürstenhalter mit einer Torsionsfeder und einen Stützstift. Die Torsionsfeder übt durch Federkraft, die um den Stützstift herum ausgeübt wird, seitlichen Druck auf die Bürste aus und hält die Bürste auch vorübergehend im Bürstenhalter fest. Wenn der vorübergehend gehaltene Zustand des Bürstenhalters entspannt ist, drückt die Federkraft der Torsionsfeder die Bürste in Richtung eines Kommutators.

Der Erfindung liegt die Aufgabe zugrunde, ein besonders geeignetes Bürstensystem eines Elektromotors anzugeben, das vorteilhafterweise vergleichsweise einfach zu montieren ist. Der Erfindung liegt des Weiteren die Aufgabe zugrunde, einen möglichst einfachen und kostengünstig herstellbaren Elektromotor mit einem solchen Bürstensystem anzugeben.

Das erfindungsgemäße Bürstensystem für einen Elektromotor weist mindestens eine Bürste auf, die beispielsweise aus gepresstem Kohlenstaub hergestellt ist, und an der eine flexible, litzenartige Anschlussleitung angebunden oder vorzugsweise in die Bürste integriert ist. Mit der Bürste steht ein Federelement in Wirkverbindung, wobei das Federelement auf die Bürste eine Federkraft ausübt. Infolge dessen wird die Bürste bewegt, wobei sie zweckmäßigerweise in einem köcherartigen Bürstenschacht geführt ist.

Die Anschlussleitung der Bürste ist dazu in einem Schachtlängsschlitz des zugeordneten Bürstenschachts geführt. Der Schachtlängsschlitz verläuft bezogen auf die Rotor- oder Motorachse geeigneterweise radial. Die Bewegungsrichtung oder Bürstenandruckrichtung der Bürste ist hierbei auf eine Stelle zu, an der sich im Montagezustand des Elektromotors ein Kommutator befindet. Mit anderen Worten wird während des Betriebs des Elektromotors die Bürste mittels des Federelements auf den Kommutator zur Bildung eines Gleitkontakts gepresst. Folglich ist der Kommutator mit der Bürste und insbesondere mit der Anschlussleitung elektrisch kontaktiert und ein elektrischer Stromfluss zur Bestromung eines den Kommutator umfassenden Rotors ermöglicht.

Der Schachtlängsschlitz weist eine Engstelle auf, welche die Anschlussleitung durchschreitet, wenn die Wirkverbindung des Federelementes mit der Bürste hergestellt ist. Die Engstelle ist hierbei an einer Stelle entlang des Schachtlängsschlitz angeordnet, bei der die mit der Anschlussleitung verbundene Bürste vor einem Durchschreiten nicht in einen den Kommutator aufnehmenden Fügeraum des Bürstensystems hineinragt bzw. nicht mit dem Kommutator im Zuge dessen Montage kollidiert.

Durch die Engstelle des Schachtlängsschlitzes ist die Montage des Bürstensystems und des Elektromotors vereinfacht. Dafür wird die mit der Anschlussleitung versehene Bürste in den Bürstenschacht eingeführt und das Federelement montiert. In einem darauffolgenden Schritt wird der Kommutator bestimmungsgemäß montiert, wobei die Engstelle die Anschlussleitung und somit die Bürste aus dem Fügeraum des Kommutators zurückhält. Der Fügeraum ist hierbei insbesondere eine zentrale Aussparung des Bürstensystems. Dadurch beeinflusst die Bürste die Montage nicht negativ, da sie aufgrund der Engstelle nicht den zukünftigen Raum des Kommutators einnehmen kann. Des Weiteren wird hierdurch die Gefahr eines Kantenbruchs der Bürsten aufgrund einer Kollision mit dem Kommutator auf konstruktiv einfache Art und Weise vermieden.

Erst wenn der Kommutator in seine Endlage verbracht ist, wird die Wirkverbindung mit dem Federelement hergestellt, sodass dessen Federkraft auf die Bürste in Richtung des Kommutators ausgeübt wird. Hierbei wird die Anschlussleitung durch die Engstelle gedrückt, wodurch die Engstelle von der Anschlussleitung durchschritten und die Bürste in eine mit dem Kommutator kontaktierende Stellung überführt wird.

Der Bürstenschacht bildet zumindest teilweise eine formschlüssige Aufnahme der Bürste, innerhalb dessen die Bürste - bezogen auf eine Motor- oder Rotorwelle des Elektromotors - in Radialrichtung auf den Kommutator hin verschiebbar ist. Der Bürstenschacht ist beispielsweise hohlzylindrisch mit einem im Wesentlichen rechteckigen Querschnitt ausgestaltet. Zwischen dem Bürstenschacht und der Bürste ist geeigneterweise eine Spielpassung erstellt, sodass die Bürste vergleichsweise sicher geführt und ein Verkeilen vermieden ist. Auch ist somit eine Reibung vergleichsweise gering.

Die Anschlussleitung ist beispielsweise in die Bürste eingepresst oder vorzugsweise mittels einer Bohrung und einem anschließendem Verkleben in die Bürste eingebracht. Mit anderen Worten ist die Anschlussleitung insbesondere senkrecht zur Bürstenandruckrichtung überstehend an der Bürste angebunden. Die Anschlussleitung durchgreift den Schachtlängsschlitz des Bürstenschachts, wodurch die Führung der Bürste vereinfacht wird.

Der Schachtlängsschlitz ist zweckmäßigerweise U-förmig und entlang der Radialrichtung orientiert, wobei eine Schlitzöffnung des Schachtlängsschlitzes insbesondere zu einem Außenumfang des Bürstensystems, also zu einer dem Kommutator abgewandten Seite hin gerichtet ist. Insbesondere wird durch die Anschlussleitung somit ein Endanschlag der Bürste am horizontalen U-Schenkel des Schachtlängsschlitzes definiert. Dies vermeidet ein Hindurchgleiten der Bürste durch den Bürstenschacht.

Mit anderen Worten wird durch das Zusammenwirken des Schachtlängsschlitzes, der Engstelle und der Anschlussleitung eine konstruktiv einfache und kostengünstige Rückhaltung der Bürste erzeugt. Dadurch entfallen im Gegensatz zum Stand der Technik sowohl zusätzliche Bauteile (Rückhaltering) als auch Formgebungen an der Bürste. Die Bürste ist somit vorzugsweise quaderförmig ausgeführt, wodurch ein besonders einfaches Presswerkzeug zur Herstellung der Bürste verwendbar ist. Dies überträgt sich vorteilhaft auf die Herstellungskosten des Elektromotors.

Das Federelement (mechanische Feder) ist zweckmäßigerweise in einem direkten mechanischen Kontakt mit der Bürste und vorzugsweise dazu geeignet und eingerichtet, einen betriebsbedingten Abrieb der Bürste, das heisst eine durch Reibverschleiß bedingte Verkürzung der Bürste auszugleichen. Das Federelement führt die Bürste in dem Bürstenschacht somit in Bürstenandruckrichtung nach. Die Abriebrate der Bürste ist dabei im Vergleich zur Rotationsgeschwindigkeit des Kommutators langsam. Um die Bürste über deren Lebensdauer der Verkürzung nachzuführen zu können, weist das Federelement beziehungsweise dessen mit der Bürste zusammenwirkender Federarm vorzugsweise einen der Länge der Bürste entsprechenden Federweg auf.

In einer geeigneten Weiterbildung ist das Federelement insbesondere eine Schenkel- oder Drehfeder. Die Schenkelfeder weist einen zylindrischen Mittelteil auf, der nach Art einer Wendel geformt ist. Die vorzugsweise tangential abstehenden Enden der Wendel gehen jeweils in einen im Wesentlichen radial verlaufenden, hebelartigen Federschenkel über. Aufgrund des Mittelteils werden hierbei die beiden Federschenkel in eine bevorzugte Winkelposition zueinander bewegt. Die Schenkelfeder ist vorzugsweise einstückig aus einem federnden Material, beispielsweise aus Federstahl hergestellt. Die Schwenkachse, also die Axialachse des Mittelteils, ist insbesondere senkrecht zur Bürste orientiert. Das Mittelteil ist auf einen außerhalb des Bürstenschachtes an eine Bürstenplatte angeformten Tragzapfen als Lagerstelle aufgesetzt. Dadurch ist eine besonders platzsparende Anordnung auf der Bürstenplatte des Bürstensystems realisiert.

In einer bevorzugten Ausgestaltung ist einer der Federschenkel an der Bürstenplatte festgelegt beziehungsweise gegengehalten, wohingegen der verbleibende Federschenkel beweglich ist. Der nachfolgend auch als Anlageschenkel bezeichnete bewegliche Federschenkel ist aus einer Ruheposition in eine die Wirkverbindung herstellende Anlageposition an die Bürste verstellbar, wobei der Anlageschenkel in der Anlageposition freiendseitig zumindest teilweise an der Bürste anliegt. Mit anderen Worten ist die Schenkelfeder an der Anlageposition in direktem mechanischem Kontakt und somit in Wirkverbindung mit der Bürste. Die Anlageposition ist hierbei insbesondere an einer dem Kommutator abgewandten Bürstenschmalseite angeordnet.

Der Federschenkel der Schenkelfeder liegt hierbei derart unter mechanischer, federbedingter Vorspannung an der Bürste an, dass in Folge der zu einer kommutatorseitigen Kontaktfläche parallel gerichteten Anlageposition oder Anlagefläche eine radiale Kraftkomponente wirkt. Die radiale Kraftkomponente bewirkt das Anpressen der Bürste gegen den Kommutator aufgrund des betriebsbedingten Bürstenabriebs und somit eine Bewegung der Bürste entlang eines radialen Verstell- oder Verschleißweges (Federweg) in Richtung des Kommutators.

In einer vorteilhaften Ausführung ist der Anlageschenkel ein Schenkel eines U-förmig gebogenen Freiendes des Federelements, insbesondere in einer Ausgestaltung des Federelements in Form einer Schenkelfeder. Durch die Biegung ist der an der Bürste anliegende (Anlage-)Schenkel abgewinkelt oder abgerundet, wobei in der Anlageposition vorzugsweise insbesondere die Rundung an der Bürste anliegt. Dadurch ist ein Verhaken oder eine Beschädigung der Bürste durch das Federelement auf konstruktiv einfache Art und Weise vermieden.

In einer geeigneten Weiterbildung ist das Federelement, insbesondere dessen Anlageschenkel, in der Wirkverbindung mit der Bürste in einem sich in Bürstenandruckrichtung erstreckenden Führungsschlitz in einer seitlichen Schachtwand des Bürstenschachts geführt. Dadurch ist ein vergleichsweise kompakter Aufbau der Bürstenplatte ermöglicht, wobei die Bewegung der Bürste lediglich in die gewünschte Richtung erfolgt.

Die seitliche Schachtwand des Bürstenschachts weist in einer zweckmäßigen Ausbildung eine Rückhaltekontur auf, in welcher der Anlageschenkel des Federelements in der Ruheposition gehalten ist. In der Ruheposition wirkt keine Federkraft auf die Bürste, wobei die Bürste bevorzugterweise durch den Anlageschenkel in der Rückhaltekontur vor einem Herausrutschen aus dem Bürstenschacht gesichert ist. Dadurch ist die Bürste in der Ruheposition des Federelements vorzugsweise zwischen dem Anlageschenkel an der Stirnseite des Bürstenschachts und der Engstelle des Schachtlängsschlitzes in einer Position innerhalb des Bürstenschachts gehalten. Mit anderen Worten ist der Verschiebeweg der einliegenden Bürste einerseits durch den stirnseitig angeordneten Anlageschenkel, und andererseits aufgrund der angebundenen Anschlussleitung durch die entlang des Schachtlängsschlitzes eingebrachte Engstelle begrenzt, wobei die Bürste in einer solchen "Haltestellung" vorzugsweise im Wesentlichen vollständig innerhalb des Bürstenschachts angeordnet ist. Dadurch wird eine besonders einfache Montage des Elektromotors sichergestellt.

Zur Montage des Kommutators ist der Anlageschenkel durch die Rückhaltekontur vorzugsweise in der Ruheposition gehalten. Nach einem Positionieren des Kommutators wird das Federelement ausgelöst, das bedeutet, dass der Anlageschenkel von der Rückhaltekontur in den Führungsschlitz verstellt wird, sodass die Wirkverbindung hergestellt ist. Angetrieben von der Federkraft durchschreitet die Anschlussleitung die Engstelle, und der elektrische Kontakt zwischen der Bürste und dem Kommutator wird ermöglicht. Mit anderen Worten dient die Rückhaltekontur zu einem Einhängen oder Einrasten des beweglichen Anlageschenkels, sodass die Bürste nicht mit einer Federkraft beaufschlagt wird. Somit ist es beispielsweise denkbar, das Bürstensystem vollständig zu montieren während der Anlageschenkel in der Ruheposition gehalten ist. Nachdem der Elektromotor im Wesentlichen vollständig montiert ist, wird der Anlageschenkel ausgelöst oder freigegeben und die Federkraft auf die Bürste ausgeübt.

In einer geeigneten Weiterbildung ist die Engstelle durch beidseitig des Schachtlängsschlitzes in diesen hineinragenden lokalen Kantenwölbungen der Schlitzkanten gebildet. Unter Kantenwölbungen sind in diesem Zusammenhang insbesondere Materialauswölbungen an den Schlitzkanten zu verstehen, die eine sanduhrartige oder taillierte Verengung oder Verjüngung der lichten Weite des Schachtlängsschlitzes bewirken. Durch die beidseitigen Wölbungen wird die Anschlussleitung zentriert geführt, wodurch die Gefahr einer unerwünschten Biegung oder Verformung und einer dadurch bedingten Beschädigung der Anschlussleitung vorteilhaft vermieden ist. Des Weiteren ist durch die Kantenwölbungen eine besonders einfache Ausgestaltung der Engstelle realisiert, deren lichte Weite vorzugsweise an den Durchmesser der Anschlussleitung angepasst ist. Zu diesem Zwecke sind die Kantenwölbungen insbesondere ohne spitze Kanten, vorzugsweise mit Rundungen, ausgeführt, sodass die Anschlussleitung bei einem Durchschreiten nicht beschädigt wird.

In einer besonders vorteilhaften Ausführung ist die lichte Weite der Engstelle im Wesentlichen das gleiche Maß wie der

Durchmesser der Anschlussleitung. Durch das im Wesentlichen gleiche Maß der Engstelle und der Anschlussleitung, beziehungsweise der lichten Weite und des Durchmessers, ist einerseits sichergestellt, dass die Anschlussleitung nicht ungewollt, das heisst insbesondere in der Ruheposition des Anlageschenkels, selbsttätig durch die Engstelle hindurchschreiten kann. Andererseits ist bei einer Wirkverbindung der Schenkelfeder mit der Bürste sichergestellt, dass die Anschlussleitung problemlos die Engstelle durchschreiten kann, sodass die Gefahr eines (Ver-)Klemmens der Anschlussleitung innerhalb der Engstelle vorgebeugt ist. Da die Anschlussleitung vorzugsweise lediglich einmalig die Engstelle durchschreitet, insbesondere nach einer im Wesentlichen vollständigen Montage des Elektromotors, wird eine Beschädigung oder Aufspleißung der vorzugsweise litzenartigen Anschlussleitung vermieden.

In einer konstruktiv einfachen Ausgestaltung ist der Schachtlängsschlitz an einer der Bürstenplatte abgewandten Schachtoberseite des Bürstenschachts angeordnet. Mit anderen Worten verläuft die Anschlussleitung im Hinblick auf die Motorwelle zumindest teilweise in axialer Richtung, wodurch eine einfache Leitungsführung realisiert ist und auf der Bürstenplatte zusätzlicher Bauraum außerhalb des Bürstenschachts für das Federelement bereitgestellt wird.

In einer bevorzugten Anwendung ist das Bürstensystem in einem Elektromotor montiert. Durch den Einsatz eines erfindungsgemäßen Bürstensystems wird die Motormontage vereinfacht, wodurch eine besonders einfache und kostengünstige Herstellung des Elektromotors sichergestellt ist. Der Elektromotor ist vorzugweise ein Bestandteil eines Verstellantriebs eines Kraftfahrzeugs. Der Verstellantrieb, der beispielsweise ein Fensterheber ist, weist zum Beispiel ein Getriebe auf, das in einer Wirkverbindung mit einem Verstellteil (Fenster) steht. Das Getriebe selbst ist mittels des Elektromotors angetrieben.

Zweckmäßigerweise umfasst der Bürstenhalter hierbei zwei oder mehr Bürsten, die insbesondere auf gegenüberliegenden Seiten des Kommutators punktsymmetrisch zu diesem angeordnet sind. Dies vereinfacht eine Montage und bedingt weiterhin einen verringerten Platzbedarf. Des Weiteren ist dadurch auch die Gewichtsverteilung des Elektromotors ausgewogen.

Nachfolgend wird ein Ausführungsbeispiel anhand einer Zeichnung näher erläutert. Es zeigen:
- Fig. 1: in schematischer Darstellung einen Fensterheber als Verstellantrieb einer Fahrzeug-Fensterscheibe, mit einem Elektromotor und mit einer damit antriebstechnisch gekoppelten Stellmechanik,
- Fig. 2: in schematischer Draufsicht eine Darstellung eines Bürstensystems des Elektromotors mit zueinander gegenüberliegend angeordneten Bürsten, die jeweils in einem Bürstenschacht federnd gegen einen Kommutator gelagert sind,
- Fig. 3: in perspektivischer Darstellung eine Bürste mit einer integrierten Anschlussleitung,
- Fig. 4: in perspektivischer Darstellung die Bürste im Bürstenschacht mit einem anliegenden Federschenkel eines Federelements, und
- Fig. 5a und 5b: in Draufsicht die Bürste im Bürstenschacht und dem Federelement für verschiedene Verschwenkpositionen des Federschenkels.

Einander entsprechende Teile und Größen sind in allen Figuren stets mit den gleichen Bezugszeichen versehen.

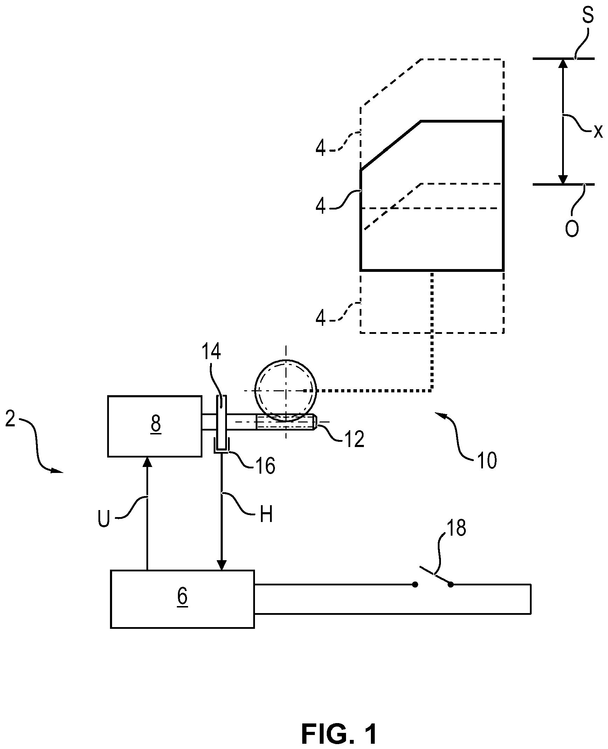

Bei dem in der Fig. 1 dargestellten Verstellantrieb 2 handelt es sich um einen elektrischen Fensterheber für eine Fensterscheibe 4 eines Kraftfahrzeugs. Der Verstellantrieb 2 ist hierzu zweckmäßigerweise in einer nicht näher dargestellten Fahrzeugtür des Kraftfahrzeugs integriert. Der Verstellantrieb 2 umfasst eine Steuereinheit 6 zur signaltechnischen Ansteuerung eines Stellmotors 8, welcher über eine Stellmechanik 10 auf die Fensterscheibe 4 wirkt. Die Stellmechanik 10 kann beispielsweise in Form eines doppelt geführten Seilfensterhebers oder als Kreuzarm-Fensterheber ausgeführt sein. Sie umfasst insbesondere eine Motorwelle 12.

Die Steuereinheit 6 ist in dieser Ausführung zumindest im Wesentlichen durch einen Mikrocontroller mit einer darauf implementierten Steuer- und Auswertesoftware gebildet. Innerhalb der Steuereinheit 6 ist vorzugsweise ein Einklemmschutz integriert, der ein Einklemmen eines Objekts von der Fensterscheibe 4 verhindert, das sich innerhalb des Verstellwegs befindet.

Bei einer Betätigung des nachfolgend auch als Elektromotor bezeichneten Stellmotors 8 wird die Fensterscheibe 4 in ihrer (Scheiben-)Position x verfahren. Die Fensterscheibe 4 ist hierbei reversibel zwischen einer Schließstellung S, die die höchstmögliche Position x darstellt, und einer Öffnungsstellung O, die die tiefstmögliche Position x darstellt, verfahrbar. In diesen Stellungen S und O ist die Fensterscheibe 4 in Fig. 1 jeweils gestrichelt angedeutet. Mit durchgezogenen Linien ist die Fensterscheibe 4 dagegen in einer halbgeöffneten Zwischenstellung dargestellt. Als Bezugspunkt für die Position x ist in Fig. 1 beispielhaft die Höhe der oberen Scheibenkante gewählt.

Zur Ermittlung der jeweils aktuellen Position x der Fensterscheibe 4 ist an der Motorwelle 12 ein Ringmagnet 14 angeordnet, der eine geradzahlige Anzahl von umfänglich verteilten Magnetpolen aufweist. Mit dem Ringmagnet 14 wirkt ein als Positionsgeber dienender Hall-Sensor 16 zusammen. Der Hall-Sensor 16 detektiert bei einer Drehung der Motorwelle 12 das - infolge der an dem Hall-Sensor 16 vorbeiziehenden Magnetpole - fluktuierende Magnetfeld des Ringmagneten 14 und generiert ein entsprechend pulsierendes Hall-Signal H, das er an die Steuereinheit 6 ausgibt. Die Steuereinheit 6 ermittelt durch Zählung und Aufsummierung der Pulse des Hall-Signals H ein Positionsmaß, das unter gewöhnlichen Betriebsbedingungen proportional zu der tatsächlichen Position x der Fensterscheibe 4 ist.

Ein gewöhnlicher Stellvorgang, bei dem die Fensterscheibe 4 aus ihrer Schließstellung S in Richtung auf die Öffnungsstellung O verfahren werden soll, wird von einem Fahrzeugnutzer durch Betätigung eines zum Beispiel an einer Türverkleidung angeordneten Tasters 18 ausgelöst. Durch den Taster 18 wird in diesem Fall ein Betätigungssignal an die Steuereinheit 6 gesendet, aufgrund dessen die Steuereinheit 6 den Elektromotor 8 durch Applikation einer Motorspannung U in einer öffnenden Stellrichtung antreibt.

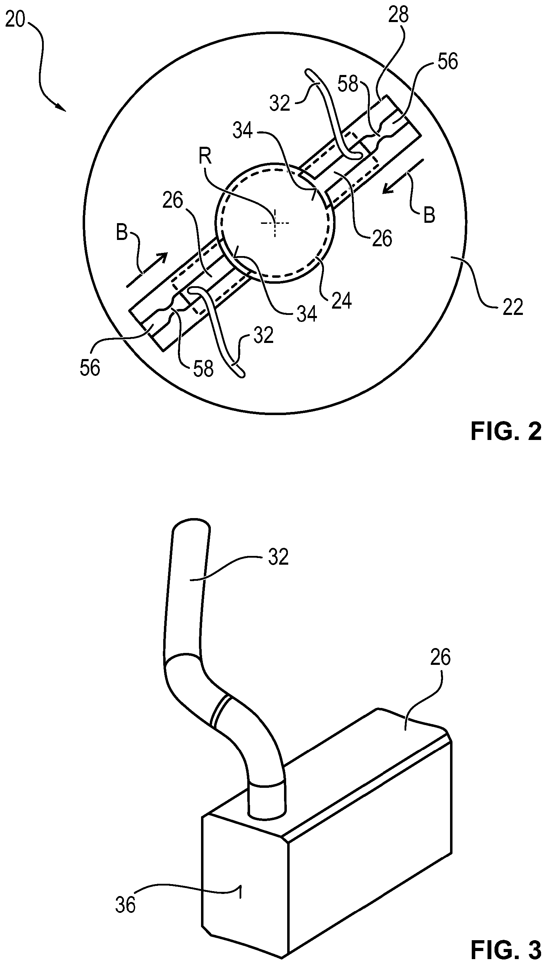

Der insbesondere als Kommutatormotor ausgeführte Elektromotor 8 weist ein in Fig. 2 schematisch dargestelltes Bürstensystem 20 auf. Das Bürstensystem 20 umfasst eine etwa kreisringartige Bürstenplatte 22, die konzentrisch um einen wellenfest mit der Motorwelle 12 gekoppelten Kommutator 24 des Elektromotors 8 angeordnet ist. Das Bürstensystem 20 umfasst weiterhin zwei Bürsten 26, die mit dem Kommutator 24 während des Betriebs nach Art von Gleitkontakten elektrisch leitfähig kontaktiert sind. Während des Betriebs drehen sich die Motorwelle (Rotorwelle) 12 und damit der Kommutator 24 um die gemeinsame Rotationsachse R, die in Fig. 2 als Kreuz veranschaulicht ist.

Des Weiteren umfasst das Bürstensystem 20 zwei im Ausführungsbeispiel gegenüberliegend angeordnete, bezogen auf die Rotationsachse R der Motorwelle 12 radial um 180° versetzte Bürstenschächte 28, in denen die Bürsten 26 radial verschiebebeweglich geführt sind. Mit anderen Worten sind die Bürsten 26 und der jeweils zugeordnete Bürstenschacht 28 bezüglich der Motorwelle 12 beziehungsweise des Kommutators 24 punktsymmetrisch an der Bürstenplatte 22 angeordnet.

Um eine Anpresskraft entlang einer radial gerichteten Bürstenandruckrichtung B zwischen den Bürsten 26 und dem Kommutator 24 zu erzeugen, weist das Bürstensystem 20 für jede Bürste 26 ein zugeordnetes Federelement 30 auf.

Die Bürsten 26 dienen zur Bestromung auf den im Betrieb rotierenden Kommutator 24 und damit auf die nicht näher dargestellten Wicklungen eines Rotors des Elektromotors 8. Wie insbesondere in Fig. 3 deutlich wird, weisen die Bürsten 26 an einer der Bürstenplatte 22 abgewandten Oberseite jeweils eine auch als Kohleseil bezeichnete integrierte Anschlussleitung 32 zur Stromübertragung auf. Die Anschlussleitung 32 ist über einen nicht näher dargestellten Steckkontakt mit der Steuereinheit 6 des Elektromotors 8 elektrisch verbunden.

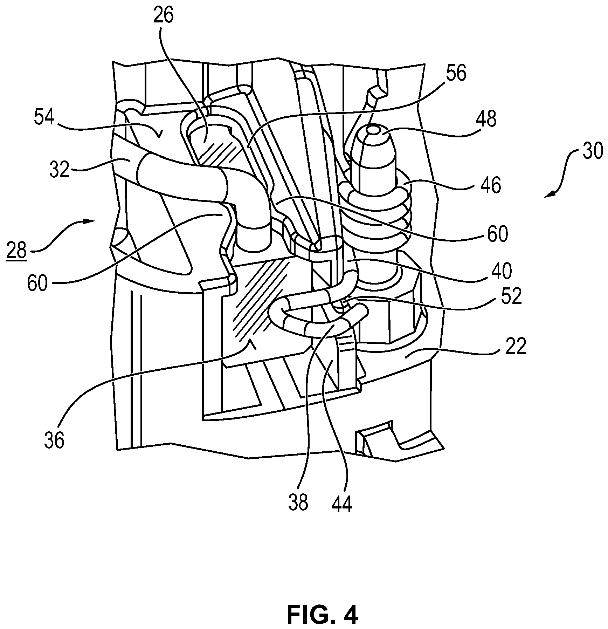

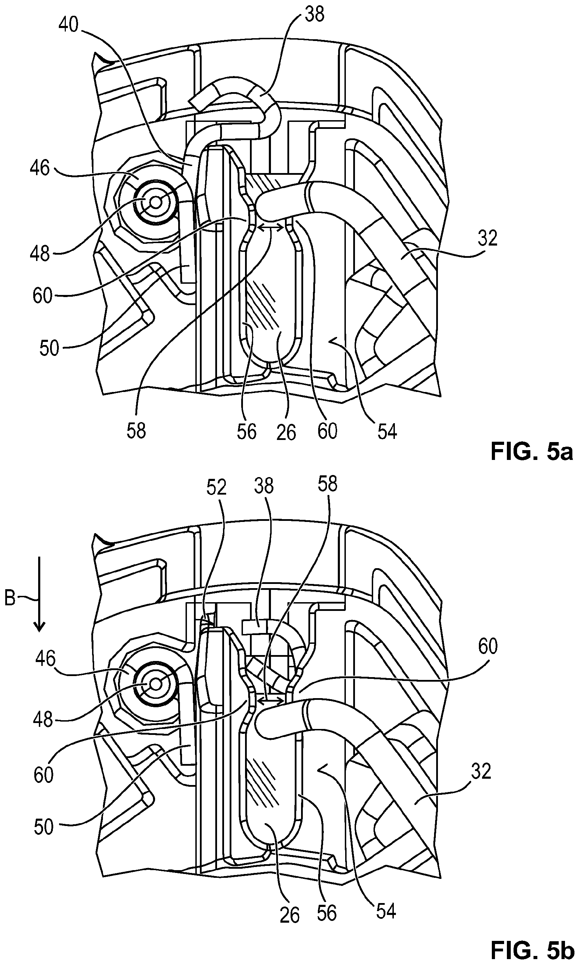

In der Figur 4 sowie in den Figuren 5a und 5b ist ausschnittsweise die Bürstenplatte 22 im Bereich eines Bürstenschachts 28 dargestellt. Die Bürstenschächte 28 sind an die Bürstenplatte 22 angeformt und insbesondere nach Art von radial verlaufenden Hohlzylindern mit einem rechteckigen Querschnitt zur im Wesentlichen formschlüssigen Aufnahme der im Bürstenschacht 28 schiebebeweglich geführten Bürsten 26 ausgestaltet. Innerhalb jedes Bürstenschachts 28 ist eine etwa quaderförmige Bürste 26 angeordnet, wobei eine radial innenliegende Kontaktfläche 34 der Bürste 26 komplementär zu einer Außenkontur des Kommutators 24 abgerundet ist.

Die Bürste 26 ist aus Kohlestaub gepresst, wobei die der Kontaktfläche 34 gegenüberliegenden Stirnseite eine Anlagefläche 36 bildet, an der in einem wirkverbundenen Zustand ein abgerundeter, U-förmiger Anlageschenkel 38 als Freiende eines (Feder-)Schenkels 40 des Federelements 30 anliegt. Hierbei ist die Abrundung des U-förmigen Anlageschenkels 38 in einem direkten mechanischen Kontakt mit der Bürste 26. Der Anlageschenkel 38 ist etwa L-förmig an den Schenkel 40 angeformt, wobei der Schenkel 40 insbesondere den vertikalen L-Schenkel und der Anlageschenkel 38, beziehungsweise einer dessen vertikalen U-Schenkel, insbesondere den horizontalen L-Schenkel bildet.

Im wirkverbundenen Zustand ist der Schenkel 40 zumindest teilweise innerhalb eines radial verlaufenden Führungsschlitzes des Bürstenschachts 28 angeordnet. Der Führungsschlitz ist in einer seitlichen Schachtwand 44 des Bürstenschachts 28 eingebracht, die im Wesentlichen senkrecht zu der Bürstenplatte 22 und den Stirnflächen 34, 36 orientiert ist.

Das nachfolgend auch als Schenkelfeder bezeichnete drehfederartige Federelement 30 weist einen mit dem Schenkel 40 verbundenen Mittelteil 46 auf, der ausserhalb des Bürstenschachts 28 auf der Bürstenplatte 22 positioniert ist. Der wendelartige Mittelteil 46 umfasst eine Anzahl an Windungen, die um einen zylindrischen Tragzapfen 48 als Lagerstelle angeordnet sind. Der parallel zur Motorwelle 12 angeordnete Tragzapfen 48 ist an die Bürstenplatte 22 einstückig beziehungsweise monolithisch angeformt. Die Windungen des Mittelteils 46 gehen in ein zweites Freiende - nachfolgend als Federschenkel oder Gegenhalt 50 bezeichnet - über, das an der Bürstenplatte 22 festgelegt beziehungsweise gegengehalten ist. Wie insbesondere in Fig. 5a und Fig. 5b ersichtlich liegt der Gegenhalt 50 insbesondere an dem Außenbereich der Schachwand 44 an.

Mittels des Gegenhalts 50 wird folglich der Mittelteil 46 im Wesentlichen drehfest gehalten, sodass bei einem Spannen der Schenkelfeder 30 und einem folglichen Verschwenken des Schenkels 40 um eine durch den Tragzapfen 48 definierte Schwenkachse radial nach außen eine radial nach innen wirkende, das heißt auf den Kommutator 24 gerichtete, (Feder-)Kraft auf die Bürste 26 beaufschlagt wird. Die Schenkachse ist hierbei parallel zur Motorwelle 12 und senkrecht zum Verlauf der Bürste 26 orientiert.

Während des Betriebs des Elektromotors 8 wird jede Bürste 26 aufgrund des Gleitkontakts mit dem Kommutator 24 abgetragen und somit in deren Länge verkürzt. Solange die Bürste 26 nicht an dem Kommutator 24 anliegt, setzt sie dem Anlageschenkel 38 keinen nennenswerten Widerstand entgegen, wodurch die Bürste 26, wie in Fig. 2 angedeutet, innerhalb des Bürstenschachts 28 entlang der Bürstenandruckrichtung B geschoben wird. Die Bewegung wird erst dann unterbrochen, wenn die Bürste 26 mit der jeweiligen Kontaktfläche 34 kraftschlüssig an dem Außenumfang des Kommutators 24 anliegt. Während dieses Prozesses wird die Schenkelfeder 30 zumindest teilweise entspannt.

Der Bürstenschacht 28 weist an der den Führungsschlitz tragenden Schachtwand 44 zum Außenumfang der Bürstenplatte 22 hin einen etwa nasen- oder nockenartigen Fortsatz als Rückhaltekontur 52 auf. Die Rückhaltekontur 52 ist hierbei bezüglich der Bürstenplatte 22 axial oberhalb des zum Außenumfang hin geöffneten Führungsschlitzes angeordnet. Wie insbesondere in Fig. 4 und in Fig. 5a ersichtlich, ist der Schenkel 40 der Schenkelfeder 30 mit dem Anlageschenkel 38 stirnseitig am Bürstenschacht 28 über der Rückhaltekontur 52 einhängbar und somit in einer Ruheposition gehalten. In der Ruheposition wird somit keine Federkraft auf die Bürste 26 ausgeübt, wobei der Anlageschenkel 38 die stirnseitige Öffnung des Bürstenschachts 28 zumindest teilweise überragt. Dadurch ist ein Herausgleiten der Bürste 26 aus dem Bürstenschacht 28 zum Außenumfang der Bürstenplatte 22 hin verhindert.

Um eine betriebssichere und verkeilungsfreie Führung der Bürste 26 im Bürstenschacht 28 sicherzustellen, weist der Bürstenschacht 28 an einer Schachtoberseite 54 einen Schachtlängsschlitz 56 zur Führung der Anschlussleitung 32 auf. Die Schachtoberseite 54 ist hierbei an der der Bürstenplatte 22 gegenüberliegenden Seite des Bürstenschachts 28 angeordnet. Der Schachtlängsschlitz 56 ist zweckmäßigerweise U-förmig und entlang der Radial- beziehungsweise Bürstenandruckrichtung B orientiert, wobei eine Schlitzöffnung des Schachtlängsschlitzes 56 zu dem Außenumfang der Bürstenplatte 22 orientiert ist.

Der Schachtlängsschlitz 56 weist ausgehend von der Schlitzöffnung etwa auf einem Drittel seiner Länge eine Engstelle 58 auf, die die lichte Weite des Schachtlängsschlitzes 56 sanduhrartig verringert. Die Engstelle 58 ist durch zwei Kantenwölbungen 60 gebildet, die beidseitig von den Schlitzkanten in den Schachtlängsschlitz 56 hineinragen. Die Kantenwölbungen 60 sind insbesondere abgerundete Materialauswölbungen an den Schlitzkanten. Die lichte Weite der Engstelle 58 ist hierbei vorzugsweise etwa gleich dem (Außen-)Durchmesser der Anschlussleitung 32.

Bei einer Montage des Elektromotors 8 werden bei dem Bürstensystem 20 zunächst die Bürsten 26 in die jeweiligen Bürstenschächte 28 eingesteckt und die jeweilige Anschlussleitung 32 in den zugeordneten Schachtlängsschlitz 56 geführt. In einem darauffolgenden Schritt werden die Schenkelfedern 30 auf die Tragzapfen 48 aufgesetzt und die Anlageschenkel 38 in die Rückhaltekonturen 52 in der Ruheposition eingesetzt. Die jeweilige Bürste 26 ist somit durch die Engstelle 58 einerseits und den Anlageschenkel 38 andererseits gegen ein Herausrutschen zum Innen- beziehungsweise Außenumfang der Bürstenplatte 22 hin gesichert. Insbesondere wird durch das im Wesentlichen gleiche Maß der lichten Weite der Engstelle 58 und dem Durchmesser der Anschlussleitung 32 sichergestellt, dass die Bürste 26 die Engstelle 58 nicht selbsttätig durchschreiten kann. Dadurch ist die zentrale Aussparung der Bürstenplatte 22 freigehalten, sodass der Kommutator 24 bzw. der diesen tragenden Rotor des Elektromotors 8 einfach einsetzbar und montierbar ist. Mit anderen Worten beeinflussen die Bürsten 26 die Montage nicht negativ, da sie durch die jeweilige Engstelle 58 den zukünftigen Platz des Kommutators 24 nicht einnehmen können.

Wenn der Kommutator 24 in seine Endlage gebracht ist, werden die Anlageschenkel 38 von den Rückhaltekonturen 52 in die Führungsschlitze verstellt. Dadurch liegen die Anlageschenkel 38 in einer Anlageposition an der Anlagefläche 36 der Bürsten 26 an, sodass eine Wirkverbindung hergestellt ist. Dadurch wird eine Federkraft entlang der Bürstenandruckrichtung B auf die Bürsten 26 ausgeübt, wodurch die Anschlussleitung 32 durch die Engstelle 58 hindurchgedrückt wird, und somit die Engstelle 58 durchschreitet. Nach dem Durchschreiten der jeweiligen Engstelle 58 werden die Bürsten 26 mit ihren zugeordneten Kontaktflächen 34 funktionsgemäß an den Kommutator 24 gepresst.

Die Erfindung ist nicht auf das vorstehend beschriebene Ausführungsbeispiel beschränkt. Vielmehr können auch andere Varianten der Erfindung von dem Fachmann hieraus abgeleitet werden, sofern sie die Erfindung, wie in den nachfolgenden Ansprüchen definiert, nicht verlassen.

### Bezugszeichenliste

- 2: Verstellantrieb
- 4: Fensterscheibe
- 6: Steuereinheit
- 8: Stellmotor/Elektromotor
- 10: Stellmechanik
- 12: Motorwelle
- 14: Ringmagnet
- 16: Hall-Sensor
- 18: Taster
- 20: Bürstensystem
- 22: Bürstenplatte
- 24: Kommutator
- 26: Bürste
- 28: Bürstenschacht
- 30: Federelement/Schenkelfeder
- 32: Anschlussleitung
- 34: Kontaktfläche/Stirnfläche
- 36: Anlagefläche/Stirnfläche
- 38: Anlageschenkel
- 40: Schenkel
- 44: Schachtwand
- 46: Mittelteil
- 48: Tragzapfen
- 50: Federschenkel/Gegenhalt
- 52: Rückhaltekontur
- 54: Schachtoberseite
- 56: Schachtlängsschlitz
- 58: Engstelle
- 60: Kantenwölbung

- x: Scheibenposition
- O: Öffnungsstellung
- S: Schließstellung
- H: Hallsignal
- U: Motorspannung
- B: Bürstenandruckrichtung
- R: Rotationsachse

## Patentansprüche

1. Bürstensystem (20) eines Elektromotors (8) mit einem Kommutator (24), mit mindestens einer in einem Bürstenschacht (28) geführten und eine Anschlussleitung (32) aufweisenden Bürste (26), und mit einem Federelement (30), das in dessen Wirkverbindung mit der Bürste (26) eine Federkraft auf diese zu deren Anlage am Kommutator (24) ausübt,
- wobei der Bürstenschacht (28) einen die Anschlussleitung (32) führenden Schachtlängsschlitz (56) aufweist,
- wobei der Schachtlängsschlitz (56) des Bürstenschachts (28) eine Engstelle (58) aufweist, welche die Anschlussleitung (32) aus einem Fügeraum des Kommutators (24) zurückhält, und
- wobei die Anschlussleitung (32) von der Federkraft des Federelements (30) durch die Engstelle (58) gedrückt wird, wenn die Wirkverbindung des Federelementes (30) mit der Bürste (26) hergestellt ist.

2. Bürstensystem (20) nach Anspruch 1, wobei das Federelement (30) eine Schenkelfeder ist, die auf einen außerhalb des Bürstenschachtes (28) an eine Bürstenplatte (22) angeformten Tragzapfen (48) aufgesetzt ist.

3. Bürstensystem (20) nach Anspruch 1, wobei das Federelement (30) eine Schenkelfeder ist, die einen festgelegten Federschenkel (50) und einen beweglichen Anlageschenkel (38) aufweist, der aus einer Ruheposition in eine die Wirkverbindung herstellende Anlageposition an die Bürste (26) verstellbar ist.

4. Bürstensystem (20) nach Anspruch 3, wobei der Anlageschenkel (38) einer der Schenkel (40) eines U-förmig gebogen Freiendes des Federelements (30) ist.

5. Bürstensystem (20) nach Anspruch 1, wobei das Federelement (30) in der Wirkverbindung mit der Bürste (26) in einem sich in Bürstenandruckrichtung (B) erstreckenden Führungsschlitz in einer seitlichen Schachtwand (44) des Bürstenschachts (28) geführt ist.

6. Bürstensystem (20) nach Anspruch 5, wobei die seitliche Schachtwand (44) des Bürstenschachts (28) eine Rückhaltekontur (52) aufweist, in welcher der Anlageschenkel (38) des Federelementes (30) in der Ruheposition gehalten ist.

7. Bürstensystem (20) nach Anspruch 1, wobei die Engstelle (58) durch beidseitig des Schachtlängsschlitzes (56) in diesen hineinragende Kantenwölbungen (60) gebildet ist.

8. Bürstensystem (20) nach Anspruch 1, wobei die lichte Weite der Engstelle (58) im Wesentlichen das gleiche Maß wie der Durchmesser der Anschlussleitung (32) aufweist.

9. Bürstensystem (20) nach Anspruch 1, wobei der Schachtlängsschlitz (56) an einer der oder einer Bürstenplatte (22) abgewandten Schachtoberseite (54) des Bürstenschachts (28) angeordnet ist.

10. Elektromotor (8) mit einem Bürstensystem (20) nach Anspruch 1.

## Claims

1. Brush system (20) of an electric motor (8) with a commutator (24), with at least one brush (26) guided in a brush shaft (28) and having a connecting line (32), and with a spring element (30), which, in its operative connection with the brush (26), exerts a spring force on the latter for its contact with the commutator (24),
- wherein the brush shaft (28) has a longitudinal shaft slot (56) guiding the connecting line (32),
- wherein the longitudinal shaft slot (56) of the brush shaft (28) has a bottleneck (58), which retains the connecting line (32) from a joining space of the commutator (24), and
- wherein the connecting line (32) is pressed through the bottleneck (58) by the spring force of the spring element (30) when the operative connection of the spring element (30) with the brush (26) is established.

2. Brush system (20) according to claim 1, wherein the spring element (30) is a torsion spring mounted on a support pin (48) formed on a brush plate (22) outside the brush shaft (28).

3. Brush system (20) according to claim 1, wherein the spring element (30) is a leg spring having a fixed spring leg (50) and a movable contact leg (38), which is adjustable from a rest position to an abutment position against the brush (26) establishing the operative connection.

4. Brush system (20) according to claim 3, wherein the contact leg (38) is one of the legs (40) of a U-shaped bent free end of the spring element (30).

5. Brush system (20) according to claim 1, wherein the spring element (30) is guided in the operative connection with the brush (26) in a guide slot extending in the brush pressure direction (B) in a lateral shaft wall (44) of the brush shaft (28).

6. Brush system (20) according to claim 5, wherein the lateral shaft wall (44) of the brush shaft (28) has a retaining contour (52), in which the contact leg (38) of the spring element (30) is held in the rest position.

7. Brush system (20) according to claim 1, wherein the bottleneck (58) is formed by edge curvature (60) projecting into the longitudinal shaft slot (56) on both sides thereof.

8. Brush system (20) according to claim 1, wherein the clearance of the bottleneck (58) has substantially the same dimension as the diameter of the connecting line (32).

9. Brush system (20) according to claim 1, wherein the longitudinal shaft slot (56) is disposed at a shaft top (54) of the brush shaft (28) facing away from the or a brush plate (22).

10. Electric motor (8) with a brush system (20) according to claim 1.

## Revendications

1. Système de brosse (20) d'un moteur électrique (8) avec un collecteur (24), avec au moins une brosse (26) guidée dans un puits de brosse (28) et comprenant une ligne de liaison (32), et avec un élément ressort (30), qui, dans sa liaison active avec la brosse (26), exerce une force de ressort sur celle-ci pour son application sur le collecteur (24),
- dans lequel le puits de brosse (28) comprend une fente longitudinale de puits (56) guidant la ligne de liaison (32),
- dans lequel la fente longitudinale (56) du puits de brosse (28) comprend un le passage étroit (58), qui retient la ligne de liaison (32) hors d'un espace d'assemblage du collecteur (24), et
- dans lequel la ligne de liaison (32) est pressée par la force de ressort de l'élément ressort (30) à travers le passage étroit (58) lorsque la liaison active de l'élément ressort (30) avec la brosse (26) est établie.

2. Système de brosse (20) selon la revendication 1, dans lequel l'élément ressort (30) est un ressort à branches, qui est placé sur un tourillon porteur (48) formé sur une plaque de brosse (22) à l'extérieur du puits de brosse (28).

3. Système de brosse (20) selon la revendication 1, dans lequel l'élément de ressort (30) est un ressort à branches, qui comprend une branche de ressort fixe (50) et une branche d'appui mobile (38), laquelle branche d'appui mobile (38) peut être déplacée d'une position de repos dans une position d'appui sur la brosse (26) établissant la liaison active.

4. Système de brosse (20) selon la revendication 3, dans lequel la branche d'appui (38) est l'une des branches (40) d'une extrémité libre courbée en U de l'élément ressort (30).

5. Système de brosse (20) selon la revendication 1, dans lequel l'élément ressort (30) est guidé en liaison active avec la brosse (26) dans une fente de guidage s'étendant dans la direction de pression de la brosse (B) dans une paroi de puits latérale (44) du puits de brosse (28).

6. Système de brosse (20) selon la revendication 5, dans lequel la paroi de puits latérale (44) du puits de brosse (28) comprend un contour de retenue (52), dans lequel la branche d'appui (38) de l'élément ressort (30) est maintenue en position de repos.

7. Système de brosse (20) selon la revendication 1, dans lequel le passage étroit (58) est formé par des courbures des bords (60) faisant saillie dans la fente longitudinale (56) du puits, des deux côtés de celle-ci.

8. Système de brosse (20) selon la revendication 1, dans lequel la largeur intérieure du passage étroit (58) a sensiblement la même dimension que le diamètre de la ligne de liaison (32).

9. Système de brosse (20) selon la revendication 1, dans lequel la fente longitudinale de puits (56) est disposée sur une face supérieure de puits (54) du puits de brosse (28), opposée à la ou à une plaque de brosse (22).

10. Moteur électrique (8) avec un système de brosse (20) selon la revendication 1.
